Europäisches Patentamt

(19) European Patent Office

Office européen des brevets

(11) Veröffentlichungsnummer: **0 068 523**
**B1**

(12) **EUROPÄISCHE PATENTSCHRIFT**

(45) Veröffentlichungstag der Patentschrift:
29.01.86

(51) Int. Cl.⁴: **H 02 J 7/10,** H 02 H 7/18

(21) Anmeldenummer: **82200529.4**

(22) Anmeldetag: **03.05.82**

(54) Schaltungsanordnung zum Laden einer Akkumulatorbatterie mit pulsierendem Gleichstrom.

(30) Priorität: **17.06.81 CH 3976/81**

(43) Veröffentlichungstag der Anmeldung:
**05.01.83 Patentblatt 83/1**

(45) Bekanntmachung des Hinweises auf die Patenterteilung:
**29.01.86 Patentblatt 86/5**

(84) Benannte Vertragsstaaten:
**AT BE DE FR GB IT LU NL SE**

(56) Entgegenhaltungen:
**DE - A - 2 061 294**
**GB - A - 1 470 376**
**GB - A - 1 569 618**
**US - A - 3 648 189**
**US - A - 4 198 593**
**US - A - 4 213 080**

**WIRELESS WORLD, Band 87, Nr. 1544, Mai 1981, Seite 61, Haywards Heath, G.B. G.V. WHITNEY: "Thyristor bridge battery charger"**

(73) Patentinhaber: **Gebrüder Zehnder AG,
CH-5722 Gränichen (CH)**

(72) Erfinder: **Härri, Kurt, Im Höfli 490, CH-5727 Oberkulm (CH)**

(74) Vertreter: **Seifert, Helmut E. et al, RITSCHER & SEIFERT Patentanwälte Auf der Mauer 4, CH-8001 Zürich (CH)**

## Beschreibung

Die vorliegende Erfindung betrifft eine Schaltungsanordnung zum Laden einer Akkumulatorbatterie mit pulsierendem Gleichstrom, enthaltend mindestens ein zwischen der Stromquelle und den Anschlussklemmen der Batterie angeordnetes steuerbares Stromventil und einen zum Erzeugen einer dem Ladestrom proportionalen Referenzspannung vorgesehenen Seriewiderstand, sowie eine ebenfalls mit den Anschlussklemmen für die Batterie verbindbare und von der Batteriespannung gesteuerte Einrichtung zum Erzeugen von Steuerimpulsen für das Stromventil.

Zum Speichern elektrischer Energie werden vorzugsweise Akkumulatoren verwendet, die beim Laden die zugeführte elektrische Energie in speicherbare chemische Energie umwandeln und beim Entladen die chemische in elektrische Energie zurückwandeln. Die Menge der in einem Akkumulator speicherbaren Energie und die Höhe der abnehmbaren Spannung sind vom Aufbau und den Abmessungen der Akkumulatorzelle abhängig, weshalb zum Speichern grosser Energiemengen und/oder relativ hoher Spannungen mehrere Zellen zu einer Akkumulatorbatterie parallel und/oder in Serie geschaltet werden. Solche Akkumulatorbatterien können als mobile Energiequellen beispielsweise für Hebe-und Transportfahrzeuge oder zum Anlassen von Flugzeugtriebwerken, aber auch als stationäre Energiequelle, beispielsweise in Notstromanlagen oder in Sicherheitsanlagen, gegen Feuer, Einbruch und Diebstahl verwendet werden.

Die Umwandlung der elektrischen in die chemische Energie beim Laden ebenso wie der umgekehrte Vorgang beim Entladen sind mit einer materiellen Veränderung der Zusammensetzung sowohl der Elektrodenoberfläche als auch des Elektrolyten verbunden und kann bei unsachgemässer Betriebsweise zu einer irreversiblen Schädigung führen. Das gilt insbesondere, wenn der Lade-oder Entladestrom einen Maximalwert übersteigt, aber auch bei fortgesetztem Laden, wenn die Speicherkapazität der Zelle bereits erreicht ist. Dann wird das Wasser im Elektrolyten zersetzt, wobei die an den Elektroden entstehenden Gasblasen die feinporige Elektrodenoberfläche zerstören und die zunehmende Säurekonzentration des Elektrolyten die Elektroden «verhärtet».

Der Abbau der chemisch gespeicherten Energie erfolgt auch, wenn der Akkumulator keinen Strom an einen äusseren Stromkreis abgibt. Obwohl dieser Vorgang sehr langsam verläuft, müssen Akkumulatoren für Notstrom- und Sicherheitsanlagen, denen während langer Zeitspannen keine elektrische Energie entnommen wird, zur Sicherung ihrer Betriebsfähigkeit periodisch nachgeladen oder besser noch kontinuierlich mit einer Frischhalteladung versorgt werden, die den Selbstabbau der chemisch gespeicherten Energie kompensiert.

Um das Beschädigen einer Batterie durch fortgesetztes Laden zu vermeiden, ist es bekannt, das Ladegerät mit einer Uhr zu koppeln, die vor dem Beginn des Ladens in Abhängigkeit vom Ladezustand und von der Kapazität der Batterie eingestellt wird und die nach Ablauf der eingestellten Zeitspanne den Ladestrom unterbricht. Weil es schwierig oder sogar unmöglich ist, den Ladezustand einer Batterie genau zu bestimmen, ist es auch unwahrscheinlich, dass beim Ablauf einer aufgrund des Ladezustandes voreingestellten Ladezeit die Kapazität einer Batterie voll aufgeladen und die Sollspannung erreicht ist. In den meisten Fällen ist die voreingestellte Ladezeit abgelaufen, bevor die Batterie geladen ist, oder die Batterie ist schon vor Ablauf der Ladezeit aufgeladen, und es findet eine zeitlich begrenzte Nachladung statt. Es versteht sich auch, dass ein zeitgesteuerter Ladevorgang für die Frischhalteladung nicht geeignet ist.

Um diesen Nachteil zu vermeiden, ist aus der CH-PS 572 288 ein Ladegerät bekannt, das die Dauer des Ladestroms in Abhängigkeit von der Batteriespannung steuert und auch eine Frischhalteladung ermöglicht. Dieses Ladegerät enthält einen Netzteil mit einem Gleichrichter für pulsierenden Gleichstrom und einem gesteuerten Ventil in der einen Leitung zwischen dem Gleichrichter und der Anschlussklemme für die zu ladende Batterie. Die Anschlussklemmen sind weiter mit den Speisespannungsleitungen eines spannungsabhängigen Oszillators verbunden, dessen Ausgangssignal das genannte Ventil steuert. Auf diese Weise wird beim Anschliessen einer zu ladenden Akkumulatorbatterie der Oszillator erregt und das Ventil für den Ladestrom periodisch geöffnet, und die Oszillation und damit auch der Ladestrom werden unterbrochen, sobald die Spannung der Akkumulatorbatterie die einstellbare maximale Betriebsspannung für den Oszillator übersteigt.

Dieses Gerät ist zum Aufladen stark entladener Akkumulatorbatterien nicht geeignet, weil der spannungsabhängige Oszillator nicht nur abschaltet, wenn die Betriebsspannung einen voreinstellbaren Wert übersteigt, sondern auch nicht erregt wird, wenn die von der Akkumulatorbatterie gelieferte Betriebsspannung einen Mindestwert nicht erreicht.

Aus der CH-PS 600 646 ist darum ein verbessertes Ladegerät bekannt, das ähnlich wie das vorstehend beschriebene Gerät aufgebaut ist und zusätzlich einen Schwellwertschalter aufweist, der das Ventil für den Ladestrom steuert, solange die Spannung der Akkumulatorbatterie kleiner als die zum Erregen des Oszillators erforderliche Spannung ist.

Insbesondere das letztgenannte Gerät erfüllt alle Anforderungen, wenn nur eine Akkumulatorzelle geladen werden soll. Wird eine Akkumulatorbatterie angeschlossen, in der eine von mehreren Zellen defekt ist und darum die Sollspannung nicht erreicht, dann wird der Ladevorgang nicht unterbrochen, wenn die funktionsfähigen Zellen ihre Sollspannung erreichen, was zu einer Beschädigung oder Zerstörung auch dieser funktionsfähigen Zellen führen kann.

Der vorliegenden Erfindung liegt darum die Aufgabe zugrunde, eine Schaltungsanordnung zum Laden einer Akkumulatorbatterie zu schaffen, die es ermöglicht, den Ladestrom nach Ablauf einer voreinstellbaren Zeitspanne abzuschalten, den Ladestrom zu unterbrechen, wenn die Spannung der Batterie vor Ablauf der eingestellten Zeitspanne den Sollwert erreicht und nach dem Abschalten des Ladestroms während einer beliebig langen zeitlichen Dauer eine Frischhalteladung ermöglicht.

Erfindungsgemäss wird diese Aufgabe mit einer Schaltungsanordnung der eingangs beschriebenen Art gelöst, die gekennzeichnet ist durch einen elektrisch betätigbaren Schalter mit einer Erregerwicklung und mit einem ersten Kontaktpaar, das zwischen einer ersten Speisespannungsleitung und der abtrennbaren Speisespannungsleitung für die Einrichtung zum Erzeugen der Steuerimpulse angeordnet ist und durch einen RC-Kreis, der mit der Basis einen mit der Erregerwicklung in Serie geschalteten ersten Transistors verbunden ist, sowie durch einen zweiten Transistor, dessen Basis mit der Ausgangsleitung eines voreinstellbaren Zeitgebers verbunden ist, um den RC-Kreis während einer voreingestellten Ladezeit mit einer zweiten Speisespannungsleitung, die die gleiche Polarität wie die erste Speisespannungsleitung aufweist, zu verbinden und durch einen dritten Transistor, der vom Ausgangssignal eines eingangsseitig an die Enden des Seriewiderstands angeschlossenen Spannungskomparators gesteuert wird und während der Frischhaltebetriebsweise in den Pausen zwischen aufeinanderfolgenden Stromstössen den RC-Kreis mit der zweiten Speisespannungsleitung verbindet und dadurch, dass der Schalter ein zweites Kontaktpaar aufweist, das in der Leitung vom dritten Transistor zum RC-Kreis angeordnet ist und diese Leitung unterbricht, wenn während einer Folge der Frischhaltestromstösse die Spannung am RC-Kreis soweit abgefallen ist, dass der erste Transistor den Strom durch die Erregerwicklung unterbricht und dass der voreinstellbare Zeitgeber zwei Eingänge aufweist, wovon der eine Eingang mit einer Schaltung verbunden ist, die beim Anschliessen einer Batterie einen Einschaltimpuls erzeugt und der andere Eingang mit einer Schaltung verbunden ist, die einen Ausschaltimpuls erzeugt, wenn die Spannung der Batterie vor dem Ablauf der voreingestellten Zeit den Sollwert der Batteriespannung erreicht.

Die neue Schaltungsanordnung ermöglicht, die Ladezeit einer Akkumulatorbatterie in Abhängigkeit von der Kapazität und dem Entladestrom einzustellen. Sind alle Zellen der Batterie in gutem Zustand und erreicht die Batterie vor oder bei Ablauf der eingestellten Ladezeit die Sollspannung, dann liefert die Vorrichtung während einer beliebig langen Dauer einen von der Ladespannung gesteuerten Frischhaltestrom, was insbesondere für Notstrom- und Sicherheitsanlagen wichtig ist. Ist eine oder sind mehrere Zellen der Batterie defekt und erreichen diese nach der voreingestellten Ladezeit die Sollspannung nicht, bzw. fliesst auch nach der voreingestellten Ladezeit ein Ladestrom, der den ebenfalls voreinstellbaren Frischhaltestrom übersteigt, dann wird der Ladestrom unterbrochen. Auf diese Weise ist sichergestellt, dass die Zellen der zu ladenden Batterie nicht überladen werden, auch wenn eine Zelle oder mehrere Zellen defekt ist bzw. sind, womit das «Kochen» des Elektrolyten und ein möglicher Säureverlust sowie eine übermässige Gasbildung und Wasserverbrauch verhindert und eine optimal lange Betriebsdauer der Zellen erreicht werden können.

Nachfolgend wird eine bevorzugte Ausführungsform der neuen Vorrichtung mit Hilfe der Figuren beschrieben. Es zeigen: ·

Fig. 1 das vereinfachte Blockschaltbild einer praktisch erprobten Ausführungsform der neuen Schaltungsanordnung,

Fig. 2 das vereinfachte Schaltbild des Steuerkreises für die Betriebsweise der neuen Anordnung und

Fig. 3 das vereinfachte Schaltbild des Erregerkreises für den Zündtransformator.

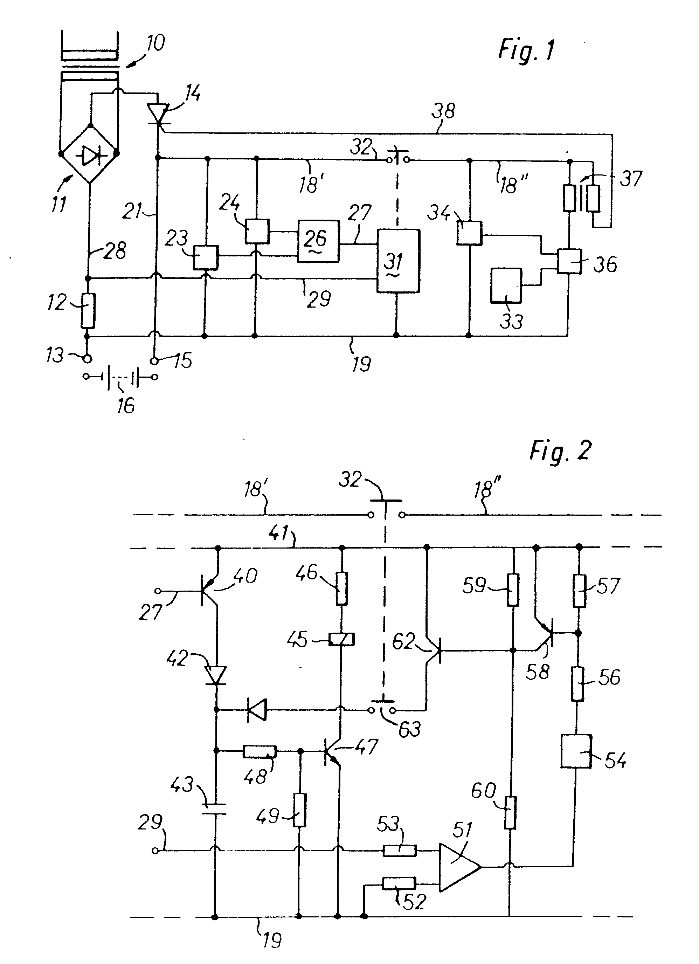

Die in Fig. 1 im Blockschema aufgezeigte Ausführungsform der Schaltungsanordnung enthält einen Eingangstransformator 10, dessen Primärwicklung über einen nichtgezeigten Hauptschalter an das Stromnetz anschliessbar ist. Die Sekundärwicklung des Transformators ist mit den Eingängen einer Gleichrichterbrücke 11 verbunden, deren einer Ausgang über einen Seriewiderstand 12 mit der einen Anschlussklemme 13 und deren anderer Ausgang über ein steuerbares Ventil 14 mit der anderen Anschlussklemme 15 für die zu ladende Akkumulatorbatterie 16 verbunden ist. Weiter enthält die Anordnung eine auftrennbare Stromschiene 18', 18" und eine durchgehende Stromschiene 19. Die auftrennbare Stromschiene ist mit der Zuleitung 21 zur anderen Anschlussklemme 15 und die durchgehende Stromschiene mit der Verbindungsleitung 22 zwischen dem Widerstand 12 und der einen Ausgangsklemme 13 verbunden. Zwischen den beiden Stromschienen sind ein Einschalt- und ein Abschaltimpulsgeber 23 bzw. 24 angeschlossen, deren Ausgänge mit zugeordneten Eingängen eines Zeitgebers 26 verbunden sind. Vom Ausgang des Zeitgebers führt eine erste Leitung 27, und von der Verbindungsleitung 28 zwischen dem einen Ausgang der Gleichrichterbrücke und dem Seriewiderstand führt eine zweite Leitung 29 zu einem Schaltersteuerkreis 31. Dieser anhand der Fig. 2 noch zu beschreibende Schaltersteuerkreis steuert ein Relais, dessen erstes Kontaktpaar 32 zum Abtrennen oder Anschliessen des Teils 18" vom Teil 18' der auftrennbaren Stromschiene vorgesehen ist. Die Vorrichtung enthält auch einen freilaufenden Oszillator 33 und eine zwischen dem abtrennbaren Stromschienenteil 18" und der Stromschiene 19 angeschlossenen Spannungsüberwachungsschaltung 34, die einen Schalter 36 steuern. Der Schalter 36 ist mit der Primärwicklung eines Impulstransformators 37 in Serie geschaltet, welche Serieschaltung ebenfalls zwischen dem abtrennbaren Stromschienenteil 18" und der durchgehenden Stromschiene 19 angeschlossen ist. Die Sekundärwicklung des Impulstransformators ist über eine Leitung 38 mit der Zündelektrode des Ventils 14 verbunden.

In Fig. 2 ist das vereinfachte Schaltbild des Schalter-Steuerkreises der neuen Anordnung gezeigt. Der Kreis enthält einen ersten pnp-Transistor 40, dessen Emitter mit einer Speisespannungsleitung 41 und dessen Kollektor über eine Diode 42 mit einem an die Stromschiene 19 angeschlossenen Kondensator 43 verbunden ist. An die Basis dieses ersten Transistors ist die Ausgangsleitung 27 des Zeitgebers 26 angeschlossen. Weiter enthält der Schaltersteuerkreis eine Relaiswicklung 45, die über einen Schutzwiderstand 46 mit der Speisespannungsleitung und über einen npn-Transistor 47 mit der Stromschiene 19 verbunden ist. Von der Basis dieses Transistors führt ein erster Widerstand 48 an die Verbindungsleitung zwischen der Diode 42 und dem Kondensator 43 und ein zweiter Widerstand 49 zur Stromschiene 19.

Der Steuerkreis enthält weiter einen als Spannungskomparator 51 arbeitenden Operationsverstärker, dessen einer Eingang über einen Schutzwiderstand 52 mit der Stromschiene 19 und dessen anderer Eingang über einen weiteren Schutzwiderstand 53 und die Leitung 29 an die Verbindungsleitung 28 zwischen dem einen Ausgang der Gleichrichterbrücke und dem Seriewiderstand 12 angeschlossen ist. Der Ausgang des Komparators ist mit dem Eingang eines Schwellwertschalters 54 verbunden, dessen Ausgang über eine Spannungsteilerschaltung 56, 57 an der Speisespannungsleitung 41 liegt. Der Abgriff der Spannungsteilerschaltung ist mit der Basis eines pnp-Transistors 58 verbunden, dessen Emitter mit der Speisespannungsleitung 41 und dessen Kollektor mit dem Abgriff einer weitern, zwischen der Speisespannungsleitung 41 und der Stromschiene 19 liegenden Spannungsteilerschaltung 59, 60 verbunden ist. Am gleichen Abgriff (und damit auch am Kollektor des Transistors 58) ist weiter die Basis noch eines pnp-Transistors 62 angeschlossen, dessen Emitter mit der Speisespannungsleitung 41 und dessen Kollektor über ein zweites Kontaktpaar 63 und eine Diode 64 mit dem Kondensator 43 und über den Widerstand 48 mit der Basis des Transistors 47 verbunden ist.

Das erste Kontaktpaar 32 in der Stromschiene 18′, 18″ und das zweite Kontaktpaar 63 werden von der Relaiswicklung 45 betätigt.

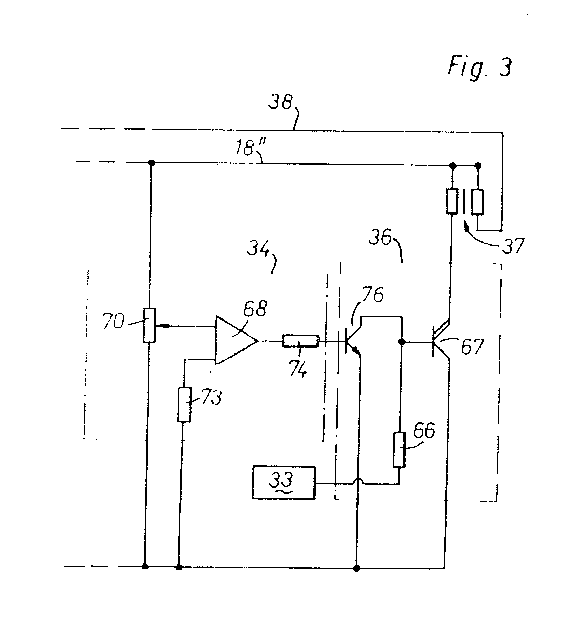

Das in Fig. 3 gezeigte vereinfachte Schaltbild des Erregerkreises für den Zündtransformator 37 zeigt den freilaufenden Oszillator 33, dessen Ausgang über einen Schutzwiderstand 66 mit der Basis eines npn-Transistors 67 verbunden ist. Der Transistor ist mit der Primärwicklung des Zündtransformators in Serie geschaltet und die Serieschaltung zwischen der auftrennbaren Stromschiene 18″ und der durchgehenden Stromschiene 19 angeschlossen. Der Kreis enthält weiter einen zur Überwachung der Spannung der an den Klemmen 13, 15 angeschlossenen Batterie vorgesehenen Operationsverstärker 68, dessen einer Eingang mit einer zwischen den Stromschienen 18″ und 19 angeordneten Spannungsteilerschaltung 70 und dessen anderer Eingang über einen Schutzwiderstand 73 mit der Stromschiene 19 verbunden ist. Der Ausgang des Operationsverstärkers ist über einen Widerstand an die Basis eines npn-Transistors 76 geführt, dessen Kollektor ebenfalls mit der Basis des Transistors 67 und dessen Emitter mit der Stromschiene 19 verbunden ist.

Es versteht sich, dass die Schaltungsanordnung auch einen Teil enthält, der die Betriebsspannung für die einzelnen Schalt- und Steuerkreise erzeugt. Dieser jedem Fachmann bekannte Schaltungsteil und die dazugehörigen Leitungen sind der einfacheren Darstellung wegen in den Fig. 1, 2 und 3 absichtlich nicht gezeigt.

Solange keine Akkumulatorbatterie an die Klemmen 13, 15 angeschlossen ist, liegt keine Spannung an den Stromschienen 18′, 19. Am Ausgang des nichtaktivierten Zeitgebers 26 erscheint dann ein (+)-Signal, das den Transistor 40 sperrt. Dann ist auch der Transistor 47 gesperrt, und es fliesst kein Strom durch die Relaiswicklung 45, weshalb die beiden zugeordneten Kontaktpaare 32, 63 geöffnet sind. Der freilaufende Oszillator 65 im Erregerkreis für den Zündtransformator tastet den Transistor 67 periodisch auf, im Zündtransformator 37 können jedoch keine Zündimpulse erzeugt werden, weil die Stromschiene 18″ keine Spannung führt.

Wenn eine Akkumulatorbatterie 16 an die Klemmen 13, 15 angeschlossen wird, erscheint die Batteriespannung an den Stromschienen 18′, 19. Sind die Pole der Batterie in der in Fig. 1 gezeigten Weise mit den Anschlussklemmen verbunden, d.h. der (−)-Pol an der Klemme 13 und der (+)-Pol an der Klemme 15, dann ist die Stromschiene 18′ positiv gegen die Stromschiene 19. Dann erzeugt der Einschaltimpulsgeber 23 einen (+)-Impuls, der den Zeitgeber 26 aktiviert. Während der voreingestellten Ladezeit erscheint dann am Ausgang des Zeitgebers ein (−)-Signal, das den Transistor 40 in den leitfähigen Zustand schaltet. Der Strom durch den Transistor ladet den Kondensator 43, so dass auch der Transistor 47 in den leitenden Zustand geschaltet wird und ein Erregerstrom durch die Relaiswicklung 45 fliesst, die die beiden Kontaktpaare 32, 63 schliesst.

Nach dem Schliessen des Kontaktpaares 32 steht auch der Stromschienenteil 18″ unter Spannung, so dass bei jedem Auftasten des Transistors 67 ein Stromstoss durch die Primärwicklung des Zündtransformators 37 fliesst, der in der Sekundärwicklung einen Zündimpuls induziert. Die Folge der Zündimpulse wird über die Leitung 38 an die Zündelektrode des Ventils 14 geleitet, das dann den Ladestromkreis von der Gleichrichterbrücke 11 über das Ventil 14, die zu ladende Akkumulatorbatterie 16 und den Seriewiderstand 12 schliesst.

Der Ladestrom erzeugt über dem Seriewiderstand 12 einen Spannungsabfall, der als Spannungsdifferenz an den Eingängen des Spannungskomparators 51 erscheint. Die Spannungsdifferenz bewirkt am Ausgang des Komparators ein (+)-Signal und am Ausgang des nachgeschalteten Schwellwertschalters 54 ein (−)-Signal. Dieses (−)-Signal schaltet den Transistor 58 in den leitfähigen Zustand, der dann den Transistor 62 sperrt. Auf diese Weise kann kein Ladestrom durch den Transistor 62 und das geschlossene Kontaktpaar 63 zum Kondensator 43 fliessen, solange das Ausgangssignal des Zeitgebers 27 den Transistor 40 in den leitfähigen Zustand schaltet.

Der zur Überwachung der Batteriespannung verwendete Operationsverstärker 68 ist mit Hilfe der Spannungsteilerschaltung 70 so eingestellt, dass an seinem Ausgang ein (−)-Signal erscheint, solange die Spannung zwischen den Stromschienen 18'', 19 kleiner als der Sollwert der Spannung der geladenen Akkumulatorbatterie ist. Das (−)-Ausgangssignal sperrt den Transistor 76; der darum die Weiterleitung der Ausgangssignale des Oszillators 33 über den Transistor 67 zum Zündtransformator nicht beeinträchtigt.

Wenn die Spannung der Akkumulatorbatterie den Sollwert erreicht, erzeugt der Abschaltimpulsgeber 24 einen Ausgangsimpuls, der den Zeitgeber 26 zurücksetzt und desaktiviert. Dann erscheint am Ausgang des Zeitgebers ein (+)-Signal, das den Transistor 40 sperrt und den Ladestrom für den Kondensator 43 unterbricht.

Die Unterbrechung des Batterieladestroms hat zur Folge, dass an den beiden Enden des Seriewiderstands 12 und damit auch an den Eingängen des Komparators 51 die gleiche Spannung liegt und am Ausgang des Komparators ein (−)-Signal erscheint. Dann erscheint am Ausgang des Schwellwertschalters 54 ein (+)-Signal, und der Transistor 58 wird gesperrt. Sobald der Transistor 58 gesperrt ist, wird der Transistor 62 in den leitfähigen Zustand geschaltet und ladet den Kondensator 43. Auf diese Weise wird ermöglicht, dass auch nach dem Erreichen des Sollwerts der Batteriespannung der Transistor 47 im leitfähigen Zustand bleibt und die Relaiswicklung 45 erregt und das Kontaktpaar 32 in der Stromschiene 18', 18'' (und natürlich auch das Kontaktpaar 63) geschlossen bleiben.

Wird die Akkumulatorbatterie nach dem Erreichen der vorgesehenen Sollspannung und der beschriebenen Unterbrechung des Ladestroms nicht von den Klemmen 13, 15 getrennt, dann bleibt die Schaltungsanordnung betriebsbereit. Sinkt dann die Batteriespannung durch den eingangs erwähnten Selbstabbau der chemisch gespeicherten Energie unter die Sollspannung, dann erscheint am Ausgang des die Spannung überwachenden Operationsverstärkers 68 wieder ein (−)-Signal, das den Transistor 76 sperrt. Dann wird die Basis des Transistors 67 von der Stromschiene 19 getrennt, und der Transistor leitet die Ausgangssignale des Oszillators 65 wieder an den Zündtransformator 37. Der dann einsetzende Ladestrom erzeugt, wie ebenfalls bereits beschrieben, eine Spannungsdifferenz über dem Seriewiderstand 12 und an den Eingängen des Komparators 51, was zur Folge hat, dass der Transistor 62 sperrt und der Ladestrom für den Kondensator 43 unterbrochen wird.

Die Kapazität des Kondensators 43 und der Leitungswiderstand der Seriewiderstände 48, 49 sind so bemessen, dass die Zeitspanne zum Entladen des Kondensators grösser ist als die Zeitspanne zum Nachladen der Akkumulatorbatterie im Frischhaltebetrieb. Damit wird erreicht, dass die Batterie ihre Sollspannung wieder erreicht und der zum Überwachen der Spannung vorgesehene Operationsverstärker 68 die Erzeugung von Zündimpulsen und damit den Ladestrom unterbricht, bevor der Kondensator 43 entladen ist. Mit der Unterbrechung des Batterieladestroms wird die Spannungsdifferenz an den Eingängen des Komparatots 51 wieder Null, der Transistor 62 wieder in den leitfähigen Zustand geschaltet und der Kondensator 43 wieder aufgeladen.

Wird die Sollspannung in der vorgesehenen Nachladezeit nicht erreicht, beispielsweise wegen einer defekten Akkumulatorbatterie und wird der Kondensator 43 entladen, bevor die Sollspannung erreicht wird, dann wird der Transistor 47 gesperrt, der Strom durch die Relaiswicklung 45 unterbrochen, und die beiden Kontaktpaare 32 und 63 werden geöffnet. Damit ist der Zündtransformator 37 von der Stromquelle getrennt und es ist weder eine fortgesetzte Ladung, noch eine Frischhalteladung der Batterie möglich.

Wenn nach dem Abschalten des Zeitgebers 26, d.h. während des Frischhaltebetriebs die Spannung der Batterie den Sollwert übersteigt, erscheint am Ausgang des Operationsverstärkers 68 ein (+)-Signal, das den Transistor 76 in den leitfähigen Zustand schaltet. Dadurch werden die Basis und der Emitter des Transistors 67 praktisch kurzgeschlossen, sodass der Transistor die Ausgangssignale des Oszillators 33 nicht an den Zündtransformator 37 weiterleiten kann.

Wie oben beschrieben wurde, erlaubt die neue Schaltungsanordnung das Aufladen einer Akkumulatorbatterie auf die Sollspannung und liefert bis zum Abklemmen der Batterie eine Frischhalteladung. Bei irrtümlichem Anschluss der Batterie mit falscher Polarisierung wird kein Einschaltimpuls erzeugt und darum jeder Schaden an der Batterie und an der Anordnung vermieden. Ist eine Zelle der Batterie beschädigt und erreicht die Batterie während der voreingestellten Ladezeit die Sollspannung nicht, dann unterbricht der nach Ablauf der voreingestellten Ladezeit weiterfliessende Ladestrom den Ladevorgang, womit das Überladen der betriebsfähigen Zellen und die dabei entstehende Gasbildung und der Wasserverlust vermieden werden. Der Ladevorgang wird auch unterbrochen, wenn die Batteriespannung beispielsweise infolge äusserer Erwärmung der Zellen ansteigt und die Spannung den Sollwert übersteigt, bevor die Batterie aufgeladen ist.

Die beschriebene Schaltungsanordnung kann auf vielerlei Weise modifiziert und an spezielle Betriebsbedingungen angepasst werden. Beispielsweise kann anstelle der gezeigten Einphasengleichrichterbrücke auch eine Dreiphasenbrücke verwendet werden mit sechs Ventilen und einem entsprechend ausgebildeten Zündtransformator. Das Zeitglied kann einen manuell betätigbaren Umschalter aufweisen, der es ermöglicht, die voreinstellbare Ladezeit in Abhängigkeit von den Nennwerten der zu ladenden Akkumulatorbatterie einzustellen. Der aus dem Kondensator und den beiden Seriewiderständen gebildete Verzögerungskreis für die Unterbrechung des Erregerstroms der Relaiswicklung kann nach Erfahrungswerten für den Frischhaltestrom dimensioniert werden. Praktisch erprobte Entladezeiten für den Kondensator lagen im Bereich zwischen 1 bis 5 sec. Der für die Überwachung der Batteriespannung insbesondere während des Frischhaltebetriebes verwendete Operationsverstärker kam auf Messgenauigkeiten im Bereich eines Hundertstel Volt. Der Oszillator ist vorzugsweise ein Rechteckwellengenerator, dessen Frequenz wesentlich höher als die Frequenz des Ladestroms ist und beispielsweise 800 Hz beträgt. Auf diese Weise ist eine Synchronisierung des Oszillators mit der Frequenz des Ladestroms nicht erforderlich, und die durch die Nichtsynchronisierung bedingten kleinen Verschiebungen des Zündwinkels am Ventil sind vernachlässigbar. Anstelle des zur Spannungs-Überwachung verwendeten Operationsverstärkers und des mit konstanter Frequenz schwingenden Oszillators kann aber auch ein spannungsabhängiger Oszillator der in der Einleitung erwähnten Art verwendet werden. Das kann besonders dann vorteilhaft sein, wenn die Schaltungsanordnung bei sehr tiefen Umgebungstemperaturen verwendet wird und die Arbeitsbedingungen der Anordnung an die stark temeraturabhängige Spannung der zu ladenden Akkumulatorbatterie angepasst werden sollen. Es versteht sich auch, dass die Einrichtung zum Erzeugen des Abschaltimpulses für das Zeitglied und die den Zündtransformator steuernde Spannungsmesseinrichtung auf die Sollspannung der zu ladenden Akkumulatorbatterie einstellbar sind.

Die zum Aufbau der neuen Schaltungsanordnung verwendeten elektronischen Bauelemente sind handelsüblich, und deren optimale Auswahl liegt im Bereich fachmännischen Könnens, weshalb auf diesbezügliche Angaben hier ausdrücklich verzichtet wird.

**Patentansprüche**

1. Schaltungsanordnung zum Laden einer Akkumulatorenbatterie (16) mit pulsierendem Gleichstrom, enthaltend mindestens ein zwischen einer Stromquelle (11) und den Anschlussklemmen (13, 15) der Batterie angeordnetes steuerbares Stromventil (14) und einen zum Erzeugen einer dem Ladestrom proportionalen Referenzspannung vorgesehenen Seriewiderstand (12), sowie eine ebenfalls mit den Anschlussklemmen für die Batterie verbindbare und von der Batteriespannung gespeiste Einrichtung (33, 34, 36, 37) zum Erzeugung von Stromimpulsen für das Stromventil, gekennzeichnet durch einen elektrisch betätigbaren Schalter mit einer Erregerwicklung (45) und mit einem ersten Kontaktpaar (32), das zwischen einer ersten Speisespannungsleitung (18') und der abtrennbaren Speisespannungsleitung (18'') für die Einrichtung (33, 34, 36, 37) zum Erzeugen der Steuerimpulse angeordnet ist und durch einen RC-Kreis (43, 48, 49), der mit der Basis eines mit der Erregerwicklung (45) in Serie geschalteten ersten Transistors (47) verbunden ist, sowie durch einen zweiten Transistor (40), dessen Basis mit der Ausgangsleitung eines voreinstellbaren Zeitgebers (26) verbunden ist, um den RC-Kreis (43, 48, 49) während einer voreingestellten Ladezeit mit einer zweiten Speisespannungsleitung (41), die die gleiche Polarität wie die erste Speisespannungsleitung (18') aufweist, zu verbinden und durch einen dritten Transistor (62), der vom Ausgangssignal eines eingangsseitig an die Enden des Seriewiderstands (12) angeschlossenen Spannungskomparators (51) gesteuert wird und während der Frischhaltebetriebsweise in den Pausen zwischen aufeinanderfolgenden Stromstössen den RC-Kreis (43, 48, 39) mit der zweiten Speisespannungsleitung (41) verbindet und dadurch, dass der Schalter ein zweites Kontaktpaar (63) aufweist, das in der Leitung vom dritten Transistor (62) zum RC-Kreis (43, 48, 49) angeordnet ist und diese Leitung unterbricht, wenn während einer Folge der Frischhaltestromstösse die Spannung am RC-Kreis (43, 48, 49) soweit abgefallen ist, dass der erste Transistor (47) den Strom durch die Erregerwicklung (45) unterbricht und dass der voreinstellbare Zeitgeber (26) zwei Eingänge aufweist, wovon der eine Eingang mit einer Schaltung (23) verbunden ist, die beim Anschliessen einer Batterie (16) einen Einschaltimpuls erzeugt und der andere Eingang mit einer Schaltung (24) verbunden ist, die einen Ausschaltimpuls erzeugt, wenn die Spannung der Batterie vor dem Ablauf der voreingestellten Zeit den Sollwert der Batteriespannung erreicht.

2. Schaltungsanordnung nach Anspruch 1, dadurch gekennzeichnet, dass der voreinstellbare Zeitgeber (26) ein elektronisches Bauelement ist.

3. Schaltungsanordnung nach Anspruch 1, dadurch gekennzeichnet, dass die Einrichtung (33, 34, 36, 37) zum Erzeugen von Steuerimpulsen für das Stromventil (14) mindestens einen Oszillator (33) aufweist, dessen Ausgangssignal einen im Primärkreis eines Zündimpulstransformators (38) liegenden Transistor (67) steuert, sowie eine Schaltung (70, 68, 76), die den Transistor sperrt, wenn die Spannung der Batterie den Sollwert übersteigt.

**Revendications**

1. Circuit pour charger une batterie d'accumulateurs (16) avec un courant continu pulsé, comportant au moins commutateur de courant (14) pilotable disposé entre une source de courant (11) et les bornes (13, 15) de la batterie et une résistance série (12) prévue pour produire une tension de référence proportionnelle à l'intensité de charge, ainsi qu'un dispositif (33, 34, 36, 37), qui peut également être relié aux bornes de la batterie et qui est alimenté par la tension de la batterie, pour produire des impulsions de courant pour le commutateur de courant, caractérisé par un interrupteur manœuvrable électriquement comprenant une bobine excitatrice (45) et une première paire de contacts (32) disposée entre une première ligne de tension d'alimentation (18') et une ligne de tension d'alimentation séparable (18") pour le dispositif (33, 34, 36, 37) de production des impulsions de commande; et par un circuit RC (43, 48, 49) relié à la base d'un premier transistor (47) monté en série avec la bobine excitatrice (45), ainsi que par un deuxième transistor (40) dont la base est reliée à la ligne de sortie d'une minuterie préréglable (26), pour relier le circuit RC (43, 48, 49), pendant une durée de charge préréglée, à une seconde ligne de tension d'alimentation (41) qui présente la même polarité que la première ligne de tension d'alimentation (18'); et par un troisième transistor (62) qui est commandé par le signal de sortie d'un comparateur de tension (51) relié côté entrée aux bornes de la résistance série ·(12) et qui, pendant le mode d'exploitation d'entretien au cours des poses entre les impulsions successives, relie le circuit RC (43, 48, 39) au second conducteur de tension d'alimentation (41); et en ce que l'interrupteur présente une deuxième paire de contacts (33) qui est disposée sur la ligne allant du troisième transistor (62) au circuit RC (43, 48, 49) et qui coupe cette ligne si, pendant une suite d'impulsions d'entretien, la tension au circuit RC (43, 48, 49) chute au point que le premier transistor (47) coupe le courant passant par la bobine excitatrice (45); et caractérisé en ce que la minuterie préréglable (26) présente deux entrées dont l'une est reliée à un circuit (23) qui produit une impulsion de mise en circuit lorsque l'on raccorde une batterie (16) et dont l'autre est reliée à un circuit (24) qui produit une impulsion de mise hors circuit si la tension de la batterie atteint sa valeur prescrite avant l'écoulement de la durée préréglée.

2. Circuit selon la revendication 1, caractérisé en ce que la minuterie préréglable (26) est un composant électronique.

3. Circuit selon la revendication 1, caractérisé en ce que le dispositif (33, 34, 36, 37) de production des impulsions de commande pour le commutateur de courant (14) comporte au moins un oscillateur (33) dont le signal de sortie commande un transistor (67) placé dans le circuit primaire d'un transformateur d'impulsions d'amorçage (38), ainsi qu'un circuit (70, 68, 76) qui bloque le transistor si la tension de la batterie dépasse la valeur prescrite.

**Claims**

1. A circuit arrangement for charging an accumulator battery (16) with pulsating direct current, comprising: at least one controllable current valve (14) disposed between a current source (11) and the connecting terminals (13, 15) of the battery; a series resistance (12) for producing a reference voltage proportional to the charging current; and a device (33, 34, 36, 37) which can be connected to the terminals for the battery and is fed by the battery voltage to produce current impulses for the current valve, characterised by: an electrically actuable switch having an energizing winding (45) and a first pair of contacts (32) which is disposed between a first feed voltage line (18') and the separable feed voltage line (18") for the device (33, 34, 36, 37) for producing the control impulses; an RC circuit (43, 48, 49) connected to the base of a first transistor (47) connected in series to the energizing winding (45); a second transistor (40), whose base is connected to the output line of a pre-adjustable timer (26), to connect the RC circuit (43, 48, 49) during a pre-determined charging time to a second feed voltage line (41) having the same polarity as the first feed voltage line (18'); and a third transistor (62) which is controlled by the output signal of a voltage comparator (51) connected on the input side to the ends of the series resistance (12) and which connects the RC circuit (43, 48, 49) to the second feed voltage line (51) during the keeping-fresh operational mode in the pauses between successive current surges, the circuit arrangement also being characterised in that the switch has a second pair of contacts (63) which is disposed in the line extending from the third transistor (62) to the RC circuit (43, 48, 49) and interrupts such line when, during a sequence of the keeping-fresh current surges, the voltage in the RC circuit (43, 48, 49) has dropped to such an extent that the first transistor (47) interrupts the current through the energizing winding (45), the pre-adjustable timer (26) having two inputs, one of which is connected to a circuit which delivers a switching-on impulse when a battery (16) is closed, the other input being connected to a circuit (24) which delivers a switching-off impulse when the voltage of the battery reaches the required value of battery voltage before the pre-adjusted time expires.

2. A circuit arrangement according to Claim 1 characterised in that the pre-adjustable timer (26) is an electronic constructional element.

3. A circuit arrangement according to Claim 1 characterised in that the device (33, 34, 36, 37) for producing current impulses for the current valve (14) has at least one oscillator (33) whose output signal controls a transistor (67) disposed in the primary circuit of an ignition impulse transformer (38) and a circuit (70, 68, 76) which blocks the transistor when the battery voltage exceeds the required value.

Fig. 1

Fig. 2

2/2

*Fig. 3*